# EUROPEAN PATENT APPLICATION

(11) **EP 2 148 230 A1**
(43) Date of publication of application: **27.01.2010**
(21) Application number: 09165362.6
(22) Date of filing: 14.07.2009
(51) Int. Cl.: G02B 6/42

(54) **Optical connector**

(30) Priority: 23.07.2008 JP 2008189284
(71) Applicant: Yazaki Corporation, Tokyo (JP)
(72) Inventor: Miyakawa, Daisuke, Gotemba-shi Shizuoka (JP)
(74) Representative: Grünecker, Kinkeldey, Stockmair & Schwanhäusser Anwaltssozietät

(57) **Abstract**

The light emergent from and focused by a lens 33 of a transmitting sleeve 28 is picked up by a transmitter side optical fiber 12. The distance between the lens 33 and the transmitter side optical fiber 12 made short. Meanwhile, the light that is emergent a receiver side optical fiber 14 and is scattered is picked up by a lens 37 of a receiving sleeve 29. In order to allow the light to be focused in the receiving sleeve 29 and to be received by an optical reception module 5, the distance between the lens 37 and the receiver side optical fiber 14 is made longer than in the case of the transmitting sleeve 28. A sleeve unit 3 has the transmitting sleeve 28 and the receiving sleeve 29, and is yet formed so as to constitute one part.

## Description

### BACKGROUND OF THE INVENTION

### 1. Field of the invention

The present invention relates to an optical connector having an optical transmission module, an optical reception module, a transmitting sleeve, a receiving sleeve, and an optical connector housing.

### 2. Description of the related art

Concerning optical connectors of optical fiber communication systems mounted in vehicles such as automobiles, detailed technologies are disclosed in the patent documents listed below. The below listed patent documents have been filed by the present applicant.

A lens type sleeve disclosed in the patent document 1 below is formed so as to be able to be used in common irrespective of transmission use and reception use. In contrast, the sleeves disclosed in the patent document 2 below are formed as exclusive parts for transmission and for reception that are classified into a transmitting sleeve and a receiving sleeve. Specifically, an optical waveguide for transmitting an optical signal is formed in a truncated conical shape, and is formed such that the diameter of this shape differs between transmission use and reception use.

The sleeve disclosed in the patent document 3 below is formed so that a pair of lens type sleeves are coupled by a coupling portion so as to form one part (a sleeve unit).
Patent Document 1: JP-A-2000-111765
Patent Document 2: JP-A-2002-23025
Patent Document 3: JP-A-2006-78644

The sleeve unit disclosed in the patent document 3 has the possibility that the light that leaked from the transmitting side sleeve unfavorably enters the receiving side sleeve through the coupling part. Namely, there is a possibility that crosstalk is caused. With the above-described conventional art, this constitutes a problem.

The transmitting sleeve and the receiving sleeve in the patent document 2 proposed by the present applicant are exclusive parts for transmission and for reception. Hence, an advantage is offered in that it is possible to enhance the transmission efficiency of the optical signal (the advantage that the optical loss can be reduced); however, the inventor of this application is considering to further enhance the transmission efficiency.

### SUMMARY OF THE INVENTION

The present invention has been devised in view of the above-described circumstances, and its object is to provide an optical connector capable of attaining improvement of the transmission efficiency of the optical signal.

To attain the above object, in accordance with a first aspect of the invention there is provided an optical connector comprising: an optical transmission module; an optical reception module; a light transmissive transmitting sleeve interposed between the optical transmission module and a transmitter side optical fiber to optically connect them; a light transmissive receiving sleeve interposed between the optical reception module and a receiver side optical fiber to optically connect them; and an optical connector housing which accommodates the optical transmission module, the optical reception module, the transmitting sleeve, and the receiving sleeve and to which a mating optical connector is joined, the transmitting sleeve and the receiving sleeve each including a truncated conical optical waveguide, a substantially tubular outer tube portion provided on an outer side of the optical waveguide, and a lens formed integrally at an end portion of the optical waveguide on a side close to a corresponding one of the transmitter side optical fiber and the receiver side optical fiber; wherein the transmitting sleeve and the receiving sleeve are formed such that positions of end faces of the transmitter and receiver side optical fibers in the optical connector housing in a state of being engaged with the mating optical connector are set to be identical, and distances from the respective positions of the end faces to corresponding ones of the lenses differ.

In accordance with the above-described first aspect of the invention, the light emergent from and focused by the lens of the transmitting sleeve is picked up by the transmitter side optical fiber. For this reason, the transmitting sleeve is formed so as to make the distance between the lens and the optical fiber short. Meanwhile, the light which is emergent from receiver side optical fiber and is scattered is picked up by the lens of the receiving sleeve. Therefore, in order to allow the light to be focused in the receiving sleeve and to be received by the optical reception module, the receiving sleeve is formed so as to make the distance between the lens and the optical fiber longer than in the case of the transmitting sleeve.

In accordance with a second aspect of the invention, in the optical connector according to the above-described first aspect, substantially spherical shapes of the lenses of the transmitting sleeve and the receiving sleeve are formed to be different.

In accordance with the above-described second aspect of the invention, the lenses are formed into a substantially spherical shape suitable for the transmission side and a substantially spherical shape suitable for the reception side, respectively. According to the invention, the light emergent from the lens is entirely picked up by the optical fiber, and the light emergent from the optical fiber is entirely picked up by the lens.

In accordance with a third aspect of the invention, in the optical connector according to the above-described first or second aspect, the transmitting sleeve and the receiving sleeve are coupled by a coupling portion which continues to a position different from the position of the lenses to thereby form a sleeve unit.

In accordance with the above-described third aspect of the invention, one part (sleeve unit) is formed by coupling the transmitting sleeve and the receiving sleeve. In addition, by giving consideration to the position of coupling, the sleeve unit is formed such that the light does not leak from one sleeve to another.

In accordance with a fourth aspect of the invention, in the optical connector according to the above-described third aspect, the coupling portion is integrally formed with the positioning flanges of the transmitting sleeve and the receiving sleeve, and a light-shielding-wall insertion space is formed between the positioning flanges.

In accordance with the above-described fourth aspect of the invention, the coupling portion is formed so as to be provided with the function of a positioning portion. In addition, according to the invention, the shape of the sleeve unit itself is formed more simply than in a case where the coupling portion is disposed at a position different from the positioning flanges. Furthermore, according to the invention, in the case where a light shielding wall effective for the prevention of crosstalk is provided in the optical connector housing, the sleeve unit can be formed into a shape capable of coping therewith.

In accordance with a fifth aspect of the invention, in the optical connector according to the above-described fourth aspect, the light-shielding-wall insertion space is formed so as to be concaved with a dimension of depth which is equivalent to or greater than a diameter of each of the transmitting sleeve and the receiving sleeve.

In accordance with the above-described fifth aspect of the invention, the light-shielding-wall insertion space is formed into a shape allowing the light shielding wall of a relatively long height to be inserted.

In accordance with a sixth aspect of the invention, in the optical connector according to any one of the above-described third to fifth aspects, an erroneous assembly preventing portions for restricting a direction of assembling the sleeve unit is formed on the coupling portion.

In accordance with the above-described sixth aspect of the invention, the assembling position of the transmitting sleeve and the receiving sleeve is made accurate by the formation of the erroneous assembly preventing portions.

In accordance with a seventh aspect of the invention, in the optical connector according to any one of the above-described first to sixth aspects, a light shielding wall which is inserted between the transmitting sleeve and the receiving sleeve is formed in the optical connector housing.

In accordance with the above-described seventh aspect of the invention, a light shielding wall effective in the prevention of crosstalk is formed.

According to the above-described first aspect of the invention, an advantage is offered in that the transmission efficiency of the optical signal can be improved over the conventional art by adjusting the distance between the lens and the optical fiber to a distance that is suitable for transmission use or reception use.

According to the above-described second aspect of the invention, an advantage is offered in that it is possible to attain further improvement of the transmission efficiency by adopting lens configurations in conformity with transmission use and reception use, respectively.

According to the above-described third aspect of the invention, an advantage is offered in that the transmitting sleeve and the receiving sleeve can be formed into one part (sleeve unit) without lowering the transmission efficiency. In addition, as the sleeve unit is formed, there is an additional advantage in that, it is possible to reduce the number of parts and the parts management can be facilitated.

According to the above-described fourth aspect of the invention, advantages are offered in that the coupling portion can be made to function for the purpose of positioning, and the shape of the sleeve unit itself can be simplified. In addition, according to the invention, there is an additional advantage in that the sleeve unit can be formed into a shape corresponding to the light shielding wall which is effective for the prevention of crosstalk.

According to the above-described fifth aspect of the invention, an advantage is offered in that the sleeve unit can be formed into a shape effective for the prevention of crosstalk.

According to the above-described sixth aspect of the invention, an advantage is offered in that it is possible to prevent erroneous assembly of the sleeve unit.

According to the above-described seventh aspect of the invention, an advantage is offered in that the optical connector housing can be formed into a shape effective for the prevention of crosstalk.

### BRIEF DESCRIPTION OF THE DRAWINGS

Figs. 1A and 1B are diagrams illustrating an embodiment of an optical connector in accordance with the invention, in which Fig. 1A is an exploded perspective view, taken from the mating optical connector side, of the optical connector, and Fig. 1B is an exploded perspective view, taken from the side of the optical transmission module and the optical reception module, of the optical connector;
Fig. 2 is a cross-sectional view illustrating a state in which the optical connector of the invention and the mating optical connector are engaged to establish optical connection;
Fig. 3 is a perspective view of a sleeve unit;
Figs. 4A and 4B are diagrams concerning the sleeve unit and a light shielding wall, in which Fig. 4A is a diagram of the state in which the sleeve unit is accommodated in an optical connector housing, Fig. 4B is a diagram explaining an light-shielding-wall insertion space;
Figs. 5A and 5B are cross-sectional views of sleeve units, in which Fig. 5A is a cross-sectional view of the sleeve unit in accordance with the invention, and Fig. 5B is a cross-sectional view of a sleeve unit for comparison which is used in a comparative example; and
Figs. 6A and 6B are diagrams illustrating the results of simulation, in which Fig. 6A is a diagram concerning the sleeve unit in accordance with the invention, and Fig. 6B is a diagram concerning a conventional sleeve unit in accordance with the comparative example.

### DESCRIPTION OF THE PREFERRED EMBODIMENTS

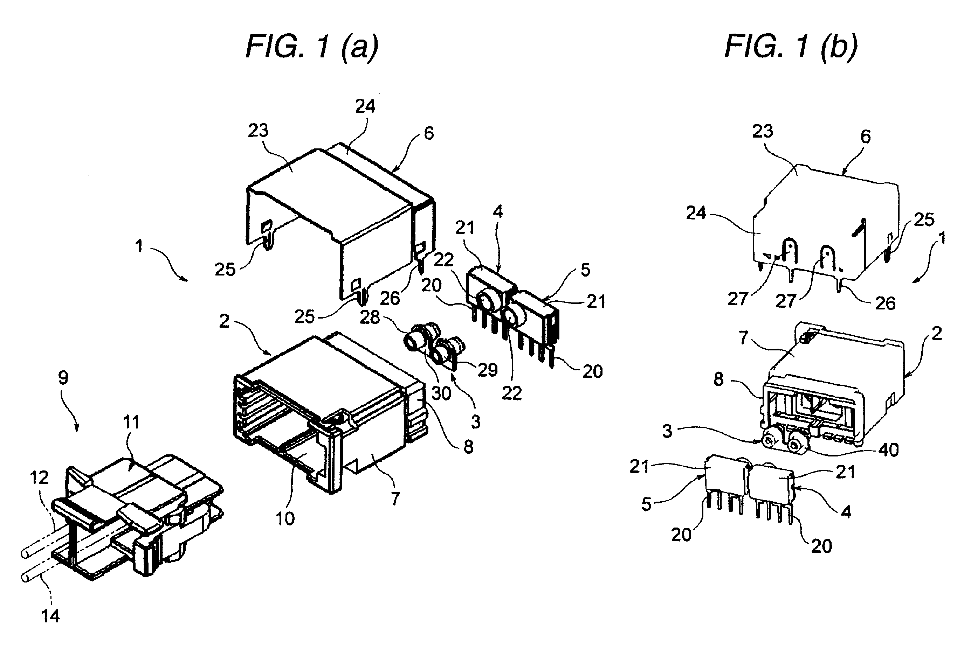

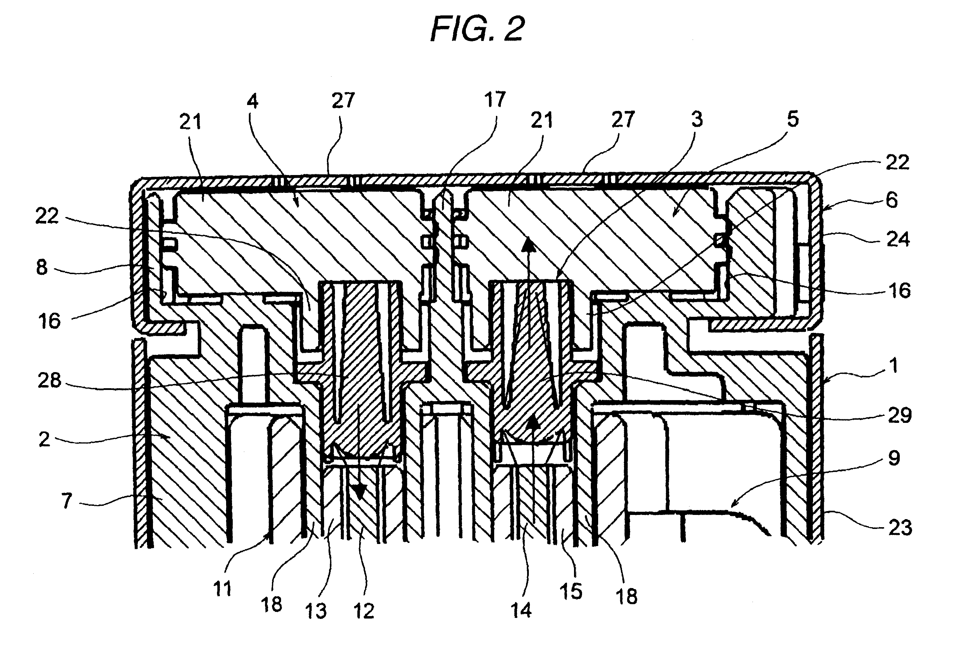

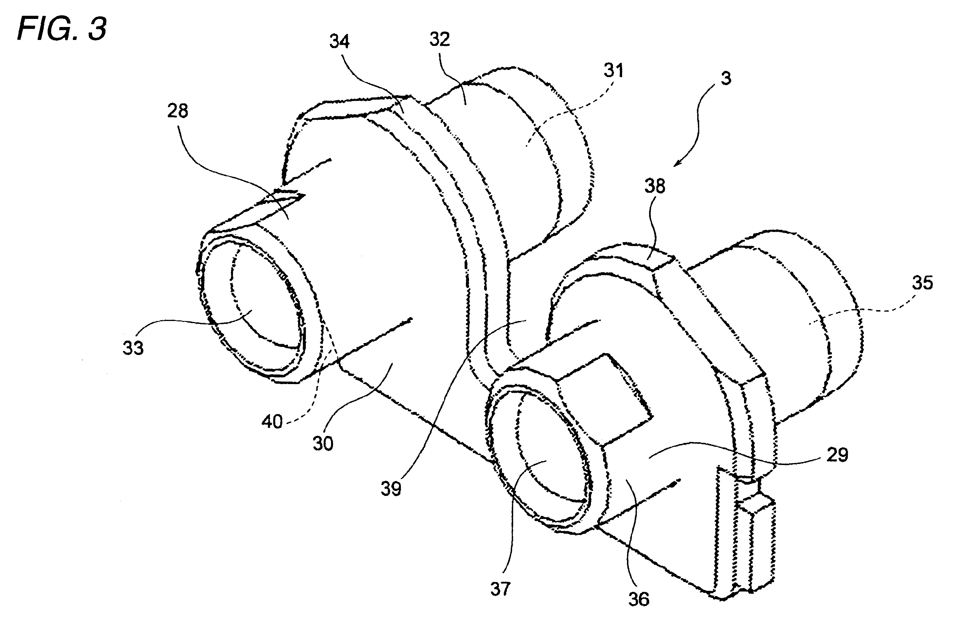

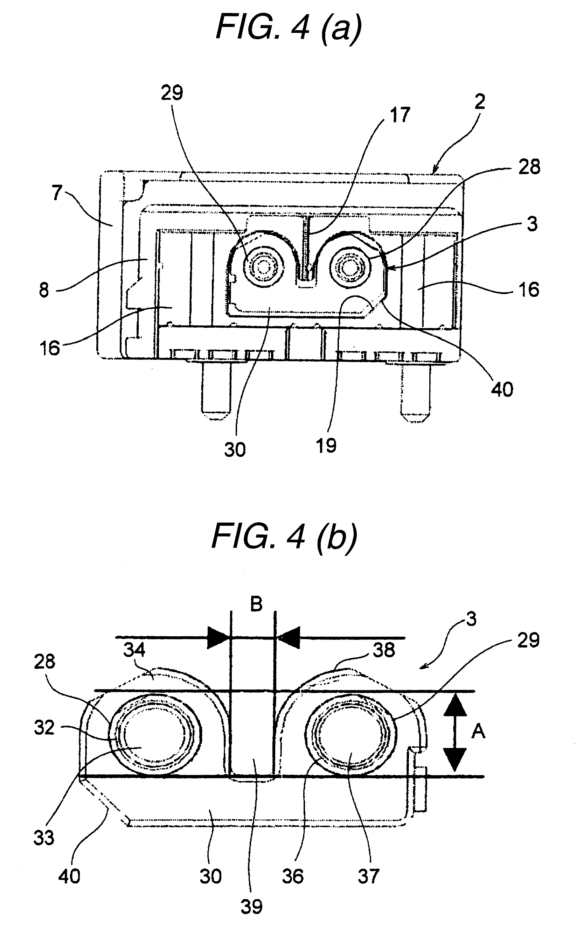

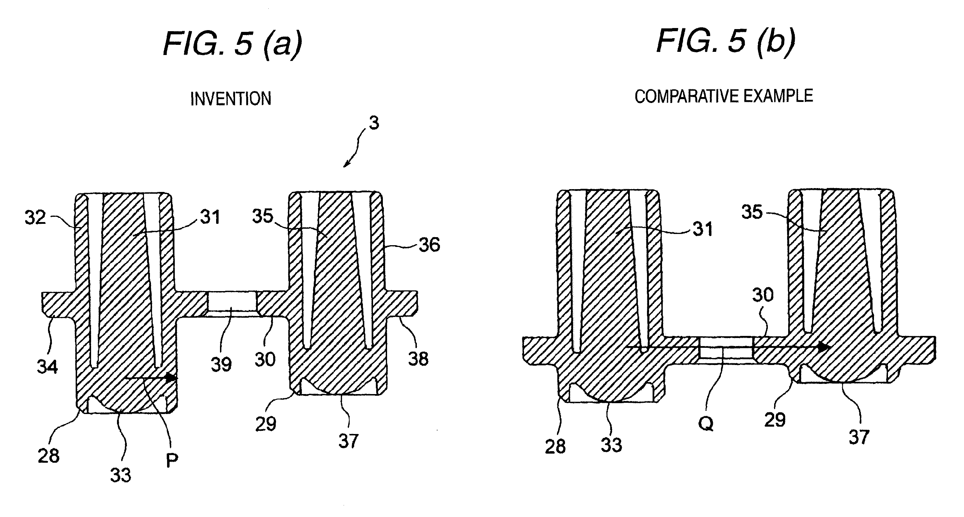

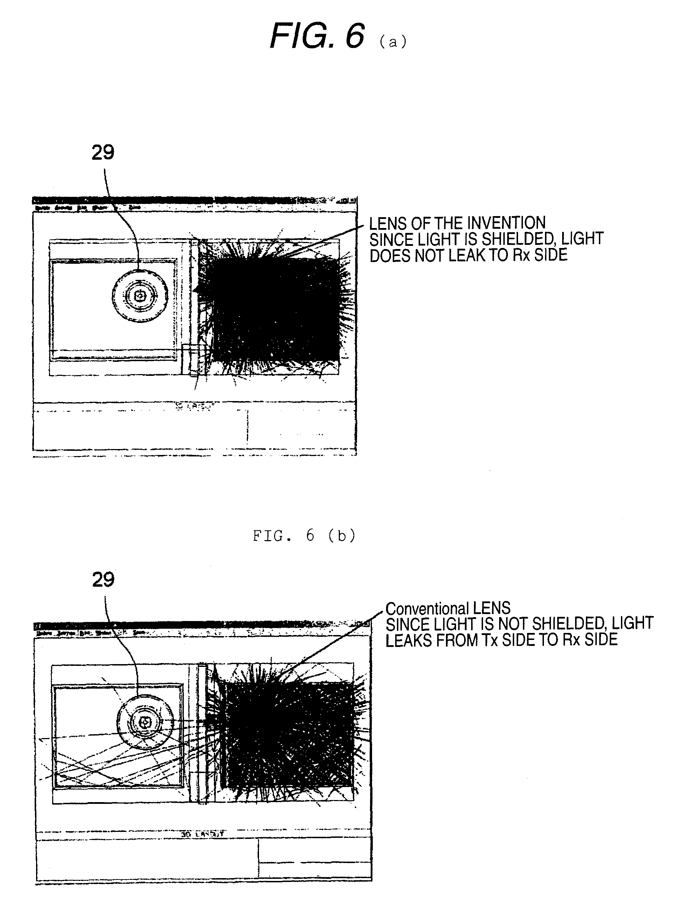

Hereafter, a description will be given with reference to the drawings. Figs. 1A and 1B are diagrams illustrating an embodiment of an optical connector in accordance with the invention, in which Fig. 1A is an exploded perspective view, taken from the mating optical connector side, of the optical connector, and Fig. 1B is an exploded perspective view, taken from the side of the optical transmission module and the optical reception module, of the optical connector. In addition, Fig. 2 is a cross-sectional view illustrating a state in which the optical connector of the invention and the mating optical connector are engaged to establish optical connection. Fig. 3 is a perspective view of a sleeve unit. Figs. 4A and 4B are diagrams concerning the sleeve unit and a light shielding wall. Figs. 5A and 5B are cross-sectional views of sleeve units. Figs. 6A and 6B are diagrams illustrating the results of simulation.

In Figs. 1A and 1B, reference numeral 1 denotes an optical connector of the invention which is used in optical communication by office automation (OA) equipment, factory automation (FA) equipment, vehicle-mounted equipment, and the like. The optical connector 1 is of a receptacle type, and is comprised of an optical connector housing 2, a sleeve unit 3, and an optical transmission module 4 and an optical reception module 5 (these are sometimes called a transmitter FOT (fiber optic transceiver) and a receiver FOT), and a shielding case 6.

The optical connector in accordance with the invention has its characteristics in the sleeve unit 3 and a portion where this sleeve unit 3 is incorporated (a below-described portion of the optical connector housing 2). Hereafter, a description will be given of the above-described component members.

In Figs. 1A to 2, the aforementioned optical connector housing 2 is a box-shaped member formed of an insulative synthetic resin material, and has a connector engaging portion 7 and an optical module accommodating portion 8. The connector engaging portion 7 is formed into such a shape that a mating optical connector 9 is engaged therewith. The connector engaging portion 7 is formed by being disposed on the front surface side of the optical connector housing 2. An engaging space 10 into which the mating optical connector 9 is inserted is formed in the connector engaging portion 7.

The mating optical connector 9 is comprised of an optical connector housing 11 formed of an insulative synthetic resin and a pair of optical fiber terminals that are accommodated in this optical connector housing 11. One of the pair of optical fiber terminals has a transmitter side optical fiber 12 and a ferrule 13 provided on this transmitter side optical connector 12. In contrast, the other optical fiber terminal has a receiver side optical fiber 14 and a ferrule 15 provided on this receiver side optical connector 14 (see Fig. 2).

A plurality of positioning projections (not shown) which are used at the time of mounting on an un-illustrated circuit board are formed on a lower wall of the optical connector housing 2.

The optical module accommodating portion 8 is formed by being disposed on the rear surface side of the optical connector housing 2. The optical module accommodating portion 8 has a pair of accommodating chambers 16 for respectively accommodating the optical transmission module 4 and the optical reception module 5 therein. The accommodating chambers 16 are formed so as to be able to accommodate the optical transmission module 4 and the optical reception module 5 in a state of being arranged side by side. A light shielding wall 17 shaped in the form of a partition wall is formed by being disposed between the accommodating chambers 16.

A pair of receiving cylinders 18 communicating with the engaging space 10 are respectively formed in the accommodating chambers 16. The sleeve unit 3 is assembled to the receiving cylinders 18 from the side of the accommodating chambers 16, and the receiving cylinders 18 are each formed into a tubular shape into which each ferrule 18 is inserted from the engaging space 10 side. A stepped portion (reference numeral omitted), against which a below-described positioning flange of the sleeve unit 3 abuts, is formed on each receiving tube 18. The stepped portion is adapted to function as a stopper.

Reference numeral 19 (see Figs. 4A and 4B) in the accommodating chamber 16 denotes an erroneous assembly preventing portion. The erroneous assembly preventing portion 19 is formed as a portion for restricting the assembling direction of the sleeve unit 3.

The light shielding wall 17 is a wall for preventing crosstalk, and is formed projectingly so as to traverse between the optical transmission module 4 and the optical reception module 5 accommodated in the accommodating chambers 16. Additionally, the light shielding wall 17 is also formed so as to traverse between the below-described positioning flanges of the sleeve unit 3.

The aforementioned optical transmission module 4 has a plurality of leadframes 20 which are electrically connected to a circuit of a circuit board (not shown), a light-emitting element (not shown), and a package portion 21 formed by a resin molding (for protecting by encapsulation with a light transmissive synthetic resin material). As known optical transmission module is used as the optical transmission module 4. An annular window 22 opposing the light-emitting element in its central position is formed in the package portion 21.

The aforementioned optical reception module 5 has a plurality of leadframes 20 which are electrically connected to a circuit of the circuit board (not shown), a light-emitting element (not shown), and a package portion 21 formed by a resin molding (for protecting by encapsulation with a light transmissive synthetic resin material). As known optical reception module is used as the optical reception module 5. An annular window 22 opposing the light-emitting element in its central position is formed in the package portion 21.

By subjecting an electrically conductive thin metal plate to press working, the aforementioned shielding case 6 is formed. Specifically, the shielding case 6 is formed into, for instance, the illustrated shape by subjecting an electrically conductive metal plate to blanking and bending (see Figs. 1A and 1B). The shielding case 6 has a housing shield portion 23 and an optical module shield portion 24. The housing shield portion 23 and the optical module shield portion 24 are formed integrally. The housing shield portion 23 is formed so as to be able to provide a measure against electromagnetic noise for the connector engaging portion 7 of the optical connector housing 2 by covering the connector engaging portion 7.

A plurality of ground pins 25 are formed on the housing shield portion 23. These ground pins 25 are each formed into such a shape as to be inserted into a fixing hole in the circuit board (not shown) in order to provide grounding.

The optical module shield portion 24 is formed so as to be able to provide a measure against electromagnetic noise for the optical transmission module 4 and the optical reception module 5 accommodated in the accommodating chambers 16 by covering these modules. Plurality of ground pins 26 and pressing springs 27 are formed on the optical module shield portion 24. These ground pins 26 are each formed into such a shape as to be inserted into a fixing hole in the circuit board (not shown) in order to provide grounding. The pressing springs 27 are formed to press the rear surfaces of the optical transmission module 4 and the optical reception module 5.

In Figs. 1A to 5A, the aforementioned sleeve unit 3 is formed of a light transmissive transparent synthetic resin material. The sleeve unit 3 has a transmitting sleeve 28 used exclusively for transmission, a receiving sleeve 29 used exclusively for reception, and a coupling portion 30 for coupling them. Although the sleeve unit 3 has the transmitting sleeve 28 and the receiving sleeve 29, the sleeve unit 3 is formed so as to constitute one part.

The transmitting sleeve 28 is formed into such a shape as to be able to optically connect the optical transmission module 4 and the transmitter side optical fiber 12 by being interposed therebetween. Also, the receiving sleeve 29 is formed into such a shape as to be able to optically connect the optical reception module 5 and the receiver side optical fiber 14 by being interposed therebetween. Hereafter, a description will be given in greater detail.

The transmitting sleeve 28 includes a truncated conical optical waveguide 31; a substantially tubular outer tube portion 32 provided integrally on the outer side of this optical waveguide 31; a lens 33 formed integrally at an end portion of the optical waveguide 31 on a side close to the transmitter side optical fiber 12; and a positioning flange 34 formed continuously from the outer tube portion 32.

Meanwhile, in the same way as the transmitting sleeve 28, the receiving sleeve 29 includes a truncated conical optical waveguide 351; a substantially tubular outer tube portion 36 provided integrally on the outer side of this optical waveguide 35; a lens 37 formed integrally at an end portion of the optical waveguide 35 on a side close to the receiver side optical fiber 14; and a positioning flange 34 formed continuously from the outer tube portion 36.

The coupling portion 30 is formed in such manner as to straddle the positioning flange 34 of the transmitting sleeve 28 and the positioning flange 38 of the receiving sleeve 29. Further, the coupling portion 30 is formed by being disposed so as to be positioned below the transmitting sleeve 28 and the receiving sleeve 29. The coupling portion 30 in this embodiment is formed into a plate-like shape with the same thickness as that of the positioning flanges 34 and 38. A light-shielding-wall insertion space 39 is formed between the positioning flange 34 and the positioning flange 38 (see Fig. 4B).

The light-shielding-wall insertion space 39 is formed to allow the light shielding wall 17 of the optical connector housing 2 to traverse (to be inserted). The light-shielding-wall insertion space 39 is formed so as to be concaved with a dimension A of depth which is equivalent to or greater than the diameter of the transmitting sleeve 28 and the receiving sleeve 29. Further, the light-shielding-wall insertion space 39 is formed so as to have an interval B conforming to the thickness of the light shielding wall 17.

Reference numeral 40 (see Figs. 4A and 4B) in the coupling portion 30 denotes an erroneous assembly preventing portion. The erroneous assembly preventing portion 40 is formed as a portion for restricting the assembling direction of the sleeve unit 3 with respect to the optical connector housing 2.

The transmitting sleeve 28 and the receiving sleeve 29 are formed such that the lengths of their portions that are located forwardly (on the side opposed by the transmitter side optical fiber 12 and the receiver side optical fiber 14) of the positioning flanges 34 and 38 are different. The reason for this is as follows: Since the light emergent from and focused by the lens 33 of the transmitting sleeve 28 is picked up by the transmitter side optical fiber 12, it is considered necessary to make the distance between the lens 33 and the transmitter side optical fiber 12 short. Meanwhile, since the light which is emergent from receiver side optical fiber 14 and is scattered is picked up by the lens 37 of the receiving sleeve 29, in order to allow the light to be focused in the receiving sleeve 29 and to be received by the optical reception module 5, it is considered necessary to make the distance between the lens 37 and the receiver side optical fiber 14 longer than in the case of the transmitting sleeve 28.

In the invention, an advantage is offered in that the transmission efficiency of the optical signal can be improved over the conventional art by virtue of the above-described adjustment of the lengths.

Fig. 2 shows a state in which the distance between the lens 33 of the transmitting sleeve 28 and the transmitter side optical fiber 12 is short, and the distance between the lens 37 of the receiving sleeve 29 and the receiver side optical fiber 14 is long (the positions of end faces of the transmitter side optical fiber 12 and the receiver side optical fiber 14 are the same).

It should be noted that the lengths of those portions of the transmitting sleeve 28 and the receiving sleeve 29 that are located rearward of the positioning flanges 34 and 38 are formed to be identical.

The positioning flanges 34 and 38 are disposed at a position different from that of the lenses 33 and 37. In other words, the coupling portion 30 is disposed at a position different from that of the lenses 33 and 37. In this embodiment, the coupling portion 30 is disposed at a position rearward of the lenses 33 and 37. The positioning flanges 34 and 38 are formed continuously from the outer tube portions 32 and 36, and at this coupling position the positioning flanges 34 and 38 are arranged to be located away from the tapered side surfaces of the optical waveguides 31 and 35 for transmitting the light (optical signal), as shown in Fig. 5A.

Accordingly, it is so ensured that even if the light tends to leak from the lens 33 in the direction of arrow P, this light does not enter the optical waveguide 35 of the receiving sleeve 29 through the coupling portion 30 (it should be noted that if the coupling portion 30 is disposed in conformity with the position of the lenses 33 and 37, as shown in Fig. 5B, there is a possibility of the light undesirably leaking to the receiving sleeve 29 side through this coupling portion 30, as indicated by arrow Q.

In the invention, by virtue of the above-described disposition, an advantage is offered in that the transmission efficiency of the optical signal can be improved further.

In Fig. 5A, although it appears in the drawing that the lenses 33 and 37 are formed in the same spherical shape, they are actually formed to be slightly different (e.g., the lens 33 is formed with R1.10, while the lens 35 is formed with R1.20). Namely, the lenses 33 and 37 are formed into a substantially spherical shape suitable for the transmission side and a substantially spherical shape suitable for the reception side, respectively. The light emergent from the lens 33 is adapted to be entirely picked up by the transmitter side optical fiber 12, and the light emergent from the receiver side optical fiber 14 is adapted to be entirely picked up by the lens 35 (see Fig. 2).

The optical waveguides 31 and 35 are formed such that their diameters in these shapes differ between transmission use and reception use. Namely, to focus the light, the receiver side optical waveguide 35 is formed to be slightly smaller. It should be noted that the lenses 33 and 37 are respectively formed integrally at one ends of the optical waveguides 31 and 35, but the other ends thereof are formed flatly. The other ends are portions that oppose the un-illustrated light-emitting element and light-receiving element. Rear end portions of the transmitting sleeve 28 and the receiving sleeve 29 including the other ends are adapted to be respectively inserted into the annular windows 22 of the optical transmission module 4 and the optical reception module 5.

In the invention, an advantage is offered in that the transmission efficiency of the optical signal can be improved even further by the above-described lenses 33 and 37 and optical waveguides 31 and 35.

If the sleeve unit 3 having the above-described arrangement and structure is assembled to the optical connector housing 2, the light shielding wall 17 is in a state of having been inserted in the light-shielding-wall insertion space 39. If a simulation is performed on the basis of this state, a result was obtained that the light does not leak from the transmitter side to the receiver side, as shown in Fig. 6A. Thus, it can be said that the optical connector in accordance with the invention is useful in improving the transmission efficiency of the optical signal.

It should be noted that Fig. 6B shows a comparative example. This simulation was performed by using the sleeve unit shown in Fig. 5B and in a state in which the light shielding wall was absent. As can be understood from the drawing, the light leaked from the transmitter side to the receiver side. Therefore, it can be said that the invention is useful.

It goes without saying that various changes and modifications may be made to the invention without departing from the spirit of the invention.

## Claims

1. An optical connector, comprising:
an optical transmission module;
an optical reception module;
a light transmissive transmitting sleeve, interposed between the optical transmission module and a transmitter side optical fiber to optically connect the optical transmission module and the transmitter side optical fiber;
a light transmissive receiving sleeve, interposed between the optical reception module and a receiver side optical fiber to optically connect the optical reception module and the receiver side optical fiber; and
an optical connector housing accommodating the optical transmission module, the optical reception module, the transmitting sleeve, and the receiving sleeve, and to which a mating optical connector is joined;
wherein the transmitting sleeve and the receiving sleeve each includes a truncated conical optical waveguide, a substantially tubular outer tube portion provided on an outer side of the optical waveguide, and a lens formed integrally at an end portion of the optical waveguide on a side that is close to a corresponding one of the transmitter side optical fiber and the receiver side optical fiber;
wherein the transmitting sleeve and the receiving sleeve are formed so that positions of end faces of the transmitter and receiver side optical fibers in the optical connector housing in a state of being engaged with the mating optical connector are set to be identical, and distances from the respective positions of the end faces to corresponding ones of the lenses differ.

2. The optical connector according to claim 1, wherein substantially spherical shapes of the lenses of the transmitting sleeve and the receiving sleeve are formed to be different.

3. The optical connector according to claim 1 or 2, wherein the transmitting sleeve and the receiving sleeve are coupled by a coupling portion which continues to a position different from the position of the lenses to thereby form a sleeve unit.

4. The optical connector according to claim 3, wherein the coupling portion is integrally formed with the positioning flanges of the transmitting sleeve and the receiving sleeve, and a light-shielding-wall insertion space is formed between the positioning flanges.

5. The optical connector according to claim 4, wherein the light-shielding-wall insertion space is formed so as to be concaved with a dimension of depth which is equivalent to or greater than a diameter of each of the transmitting sleeve and the receiving sleeve.

6. The optical connector according to any one of claims 3 to 5, wherein an erroneous assembly preventing portions for restricting a direction of assembling the sleeve unit is formed on the coupling portion.

7. The optical connector according to claim any one of claims 1 to 6, wherein a light shielding wall which is inserted between the transmitting sleeve and the receiving sleeve is formed in the optical connector housing.
